# EUROPEAN PATENT APPLICATION

(11) **EP 4 693 842 A1**
(43) Date of publication of application: **11.02.2026**
(21) Application number: 24780543.5
(22) Date of filing: 27.03.2024
(51) Int. Cl.: H02K 11/30, H02K 5/04, H02K 7/116

(54) **GEARED MOTOR**

(30) Priority: 30.03.2023 JP 2023055822
(71) Applicant: Itoh Denki Co., Ltd., Kasai-shi, Hyogo 675-2302 (JP)
(72) Inventor: NAIKI Hideo, Kasai-shi, Hyogo 679-0105 (JP); MIKI Kazuwo, Kasai-shi, Hyogo 679-0105 (JP)
(74) Representative: Meissner Bolte Partnerschaft mbB
(86) International application number: PCT/JP2024/012457
(87) International publication number: WO 2024/204442

(57) **Abstract**

The present invention can provide a geared motor capable of facilitating attachment and detachment of a board.

In a geared motor including a motor, and a rotating body that rotates by receiving power from the motor, the geared motor includes: a geared motor body; a board; and a board accommodation member that accommodates at least a part of the board. The board accommodation member is attachable to and detachable from the geared motor body in an accommodated state where at least a part of the board is accommodated, and is shiftable between an attached state where the board accommodation member is attached to the geared motor body and a detached state where the board accommodation member is detached from the geared motor body. When shifting to the attached state or the detached state is performed, one of the board accommodation member and the geared motor body is slid relative to the other with the board accommodation member staying in the accommodated state and the geared motor body engaged with each other.

## Description

### TECHNICAL FIELD

The present invention relates to a geared motor.

### BACKGROUND ART

A geared motor in which a motor and a speed reducer are integrated is widely known. As such a geared motor, the present applicant has filed an application in the past (Patent Document 1).

The geared motor disclosed in Patent Document 1 is formed by coupling a gear box portion and a motor unit. The gear box portion includes a rotating body and a receiving member, and the rotating body is pivotally supported by the receiving member. Furthermore, the motor unit includes a motor case portion, a motor, and a control board, and the motor and the control board are accommodated in the motor case portion.

### PRIOR ART DOCUMENT

### PATENT DOCUMENT

Patent Document 1: JP 2021 - 162 157 A

### DISCLOSURE OF THE INVENTION

### TECHNICAL PROBLEM

Here, a conventional geared motor has room for improvement in that the control board incorporated in the motor case portion can be easily replaced.

That is, in a conventional geared motor, in order to replace the control board incorporated in the motor case portion, it is necessary to detach the entire motor case portion from the gear box portion, detach a wiring connected to the control board, and take out the control board. Furthermore, thereafter, it is necessary to connect the wiring to a new control board, accommodate the control board in the motor case portion together with the motor, and fix the motor case portion to the gear box portion as it is.

However, the control board replacement work as described above is very troublesome, and there is a desire to facilitate such work.

Therefore, an object of the present invention is to provide a geared motor capable of facilitating attachment and detachment of a board.

### SOLUTION TO THE PROBLEM

One aspect of the present invention for solving the above problem is a geared motor including a motor, and a rotating body that rotates by receiving power from the motor, the geared motor including: a geared motor body; a board; and a board accommodation member that accommodates at least a part of the board, wherein the board accommodation member is attachable to and detachable from the geared motor body in an accommodated state where at least a part of the board is accommodated, and is shiftable between an attached state where the board accommodation member is attached to the geared motor body and a detached state where the board accommodation member is detached from the geared motor body, and wherein when shifting to the attached state or the detached state is performed, one of the board accommodation member and the geared motor body is slid relative to the other with the board accommodation member that stays in the accommodated state and the geared motor body engaged with each other.

According to this aspect, it is possible to attach and detach the board together with the board accommodation member, and work of detaching the board accommodation member from the geared motor body is easy, so that it is possible to easily attach and detach the board.

In a preferred aspect, the geared motor body includes a motor accommodation member that accommodates at least a part of the motor, the board accommodation member being attachable to and detachable from the motor accommodation member, the board accommodation member includes a first engagement portion while the motor accommodation member include es a second engagement portion paired with the first engagement portion, and wherein when shifting to the attached state or the detached state is performed, one of the board accommodation member that stays in the accommodated state and the geared motor body is slid relative to the other with the first engagement portion and the second engagement portion engaged with each other.

According to this aspect, the board can be disposed at a position relatively close to the motor, and a wiring between the board and the motor (or another board located near the motor) can be easily routed.

In a preferred aspect, at least one of the board accommodation member and the motor accommodation member includes a heat dissipation portion having an uneven shape on a part of an outer surface thereof.

As described above, when the board is disposed at a position relatively close to the motor, the wiring can be easily routed, but the heat of the motor is transferred to the board at the time of operation, and the board may fail. Therefore, in the above-described preferred aspect, it is possible to suppress (prevent) the occurrence of failure of the board due to the heat of the motor.

In a preferred aspect, the board accommodation member includes the heat dissipation portion provided on three sides of the four sides excluding a side of the motor accommodation member while the motor accommodation member includes the heat dissipation portion provided on three sides of the four sides excluding a side of the board accommodation member.

In a preferred aspect, in the attached state, a part of the board accommodation member is disposed at a position overlapping the motor accommodation member while another part is disposed at a position not overlapping the motor accommodation member in a plan view viewed from a predetermined direction.

According to these aspects, occurrence of failure of the board due to heat of the motor can be more reliably suppressed (prevented).

In a preferred aspect, the board accommodation member includes an external accommodation member and an internal accommodation member, and in the accommodated state, the board is accommodated in the internal accommodation member while the internal accommodation member is accommodated in the external accommodation member.

According to this aspect, when the board is detached from the geared motor body and replaced, the board accommodation member may be detached from the geared motor body, the board may be replaced together with the internal accommodation member, and the board accommodation member may be attached to the geared motor body again. That is, it is sufficient to perform detailed work such as connecting the board and the connector in a place where it is easy to perform in advance, and then replace the board together with the internal accommodation member, and the replacement work of the board can be further facilitated.

In a preferred aspect, the board accommodation member includes a motor-side wall at a position closer to the motor than the board in the attached state, and a void is provided between the board and the motor-side wall in the accommodated state.

According to this aspect, it is possible to more reliably suppress (prevent) the occurrence of the failure of the board due to the heat of the motor.

### EFFECT OF THE INVENTION

According to the present invention, it is possible to provide a geared motor capable of facilitating attachment and detachment of a board.

### BRIEF DESCRIPTION OF DRAWINGS

FIG. 1A is a plan view illustrating a conveyor device including a geared motor according to an embodiment of the present invention, and FIG. 1B is an explanatory view schematically illustrating the geared motor, a driving roller, and a belt member of FIG. 1A.
FIGS. 2A and 2B are views schematically illustrating a periphery of the geared motor in FIGS. 1A and 1B, in which FIG. 2A is a perspective view and FIG. 2B is a plan view.
FIG. 3 is a perspective view illustrating the geared motor of FIG. 1.
FIG. 4 is an exploded perspective view illustrating a geared motor of FIG. 3.
FIG. 5 is a cross-sectional view illustrating the geared motor of FIG. 3.
FIG. 6A is a perspective view illustrating a state in which a receiving member of FIG. 4 is viewed from another direction, and FIG. 6B is a rear view illustrating a receiving member of FIG. 6A.
FIG. 7 is a perspective view illustrating a motor unit of FIG. 3.
FIG. 8 is a perspective view illustrating a state in which a motor unit of FIG. 7 is viewed from another direction.
FIG. 9A is an exploded perspective view illustrating a state in which an inner lid portion is detached from a motor-side outer member body in the motor unit of FIG. 7, omitting a motor-side connector, a control auxiliary board, and a wiring member extending between the motor-side connector and the control auxiliary board. FIG. 9B is a perspective view illustrating a state of the inner lid portion of FIG. 9A from another direction.
FIG. 10 is a front view illustrating the motor unit of FIG. 7, omitting the inner lid portion.
FIGS. 11A and 11B are perspective views illustrating a board unit of FIG. 3, and illustrate states viewed from different directions.
FIG. 12 is an explanatory view illustrating a board unit of FIGS. 11A and 11B, and illustrates a state in which a control board is accommodated in a board-side outer member together with the board-side internal accommodation member.
FIGS. 13A to 13C are views illustrating a board-side outer member of FIGS. 11A and 11B, where FIG. 13A is a perspective view, FIG. 13B is a perspective view illustrating a state viewed from a direction different from that of FIG. 13A, and FIG. 13C is a cross-sectional view.
FIG. 14A is an exploded perspective view illustrating an internal accommodation object of a board unit of FIG. 12, and FIG. 14B is a cross-sectional view illustrating the internal accommodation object of the board unit of FIG. 12.
FIGS. 15A to FIG. 15C are explanatory views illustrating a state in which a board unit is attached to a geared motor body in the geared motor of FIG. 3, and the board unit is attached in the order of FIG. 15A to FIG. 15C.
FIG. 16 is a cross-sectional view taken along line A-A illustrating a part of a geared motor of FIG. 5.

### BEST MODE FOR CARRYING OUT THE INVENTION

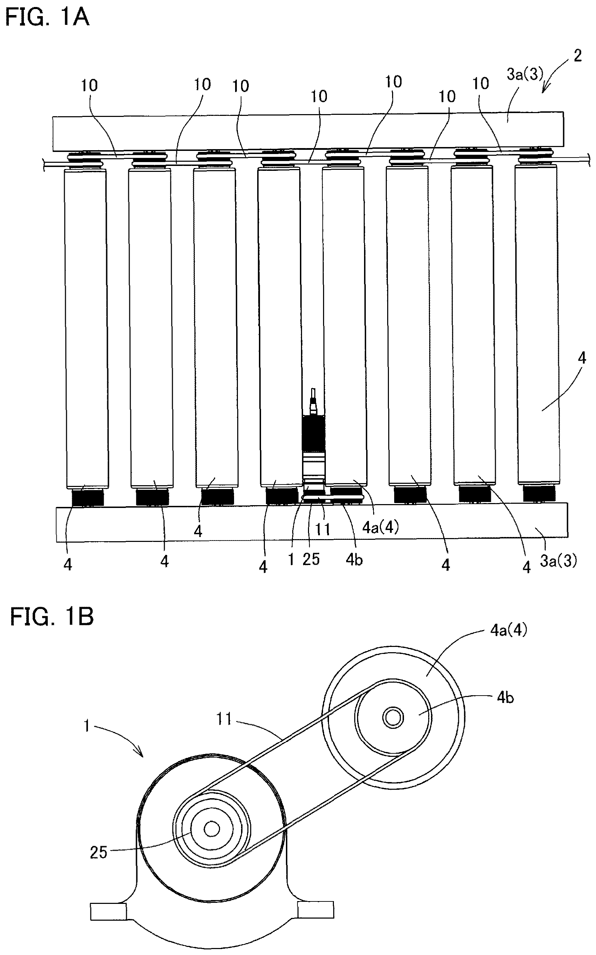

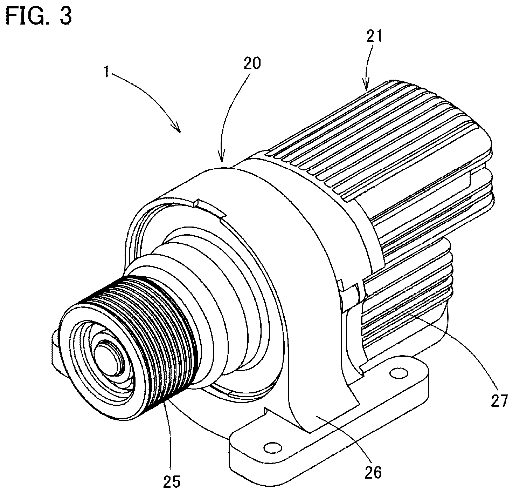

Hereinafter, a geared motor 1 according to an embodiment of the present invention will be described in detail with reference to the drawings. Note that a vertical direction will be described with reference to the state of FIG. 1. Furthermore, in the description of the geared motor 1, a side of a rotating body 25 (see FIG. 3, which will be described in detail later) will be referred to as a front side, and a side of a board unit 21 and a motor unit 27 (see FIG. 3, which will be described in detail later) on an opposite side of the front side will be referred to as a rear side. However, a front-rear direction, the vertical direction, and a left-right direction are directions used for convenience of description, and as a matter of course, these directions change according to the attachment posture of the geared motor 1.

As illustrated in FIG. 1A, the geared motor 1 of the present embodiment can be employed as a member constituting a part of a conveyor device 2, and for more details, can be employed as a driving source of a driving roller of the conveyor device 2.

Note that, to describe the conveyor device 2, the conveyor device 2 is a so-called roller conveyor, and includes the geared motor 1, a conveyor frame 3, and a plurality of conveying rollers 4.

The conveyor frame 3 includes two frame members 3a extending in parallel with each other. Then, the plurality of conveying rollers 4 is attached to the two frame members 3a.

Each of the plurality of conveying rollers 4 is rotatably supported by the two frame members 3a, and is disposed in parallel at a predetermined interval in a conveying direction of an article. Furthermore, the two conveying rollers 4 adjacent to each other in a parallel direction are coupled via an inter-roller belt member 10, and as one of the conveying rollers 4 rotates, the other of the conveying rollers 4 rotates.

Here, one conveying roller 4a of the plurality of conveying rollers 4 is coupled to the geared motor 1 by a belt member 11 as illustrated in FIG. 1B. Specifically, the conveying roller 4a includes a belt engagement portion 4b engageable with a part of the belt member 11 at a portion on an end portion side in a longitudinal direction. Then, the belt member 11 is suspended by the rotating body 25 (to be described in detail later) of the geared motor 1 and the belt engagement portion 4b that is a part of the conveying roller 4a so as to have a certain level of tension or more. Thus, one conveying roller 4a is a driving roller that rotates by receiving power from the geared motor 1, and the other conveying roller 4 is a follower roller that rotates with the rotation of the driving roller.

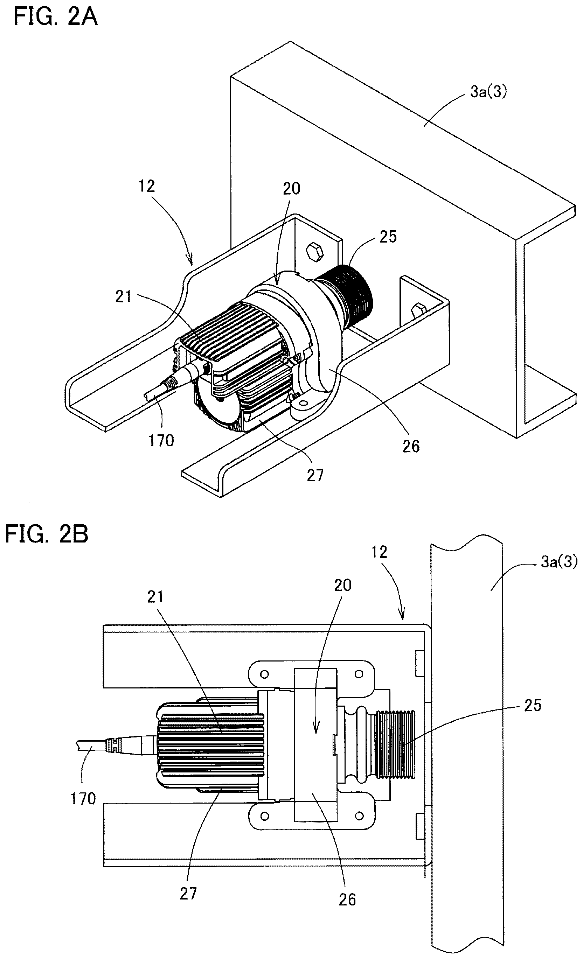

The geared motor 1 is disposed on a lower side of (obliquely below) the conveying roller 4a serving as a driving roller. Specifically, as illustrated in FIG. 2, the geared motor 1 is fixed to the inside of the frame member 3a via a motor mounting member 12.

As illustrated in FIG. 3, the geared motor 1 includes a geared motor body 20 and the board unit 21.

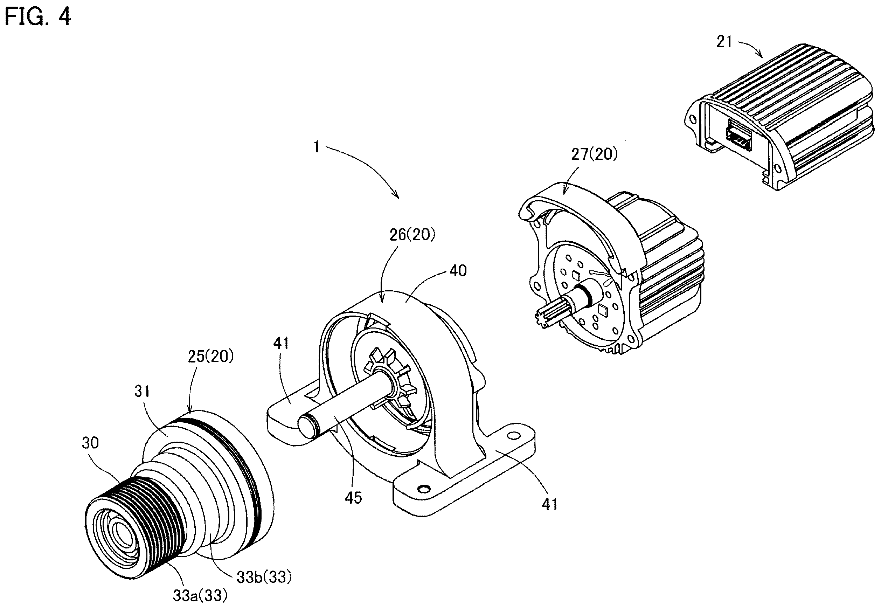

For more details, as illustrated in FIGS. 3 and 4, the geared motor body 20 includes the rotating body 25, a receiving member 26, and a motor unit 27, which are coupled to each other. Note that the rotating body 25 and the receiving member 26 constitute a gear box portion (gear box for the geared motor) of the geared motor body 20. That is, the geared motor body 20 is formed by attaching the motor unit 27 to the gear box portion.

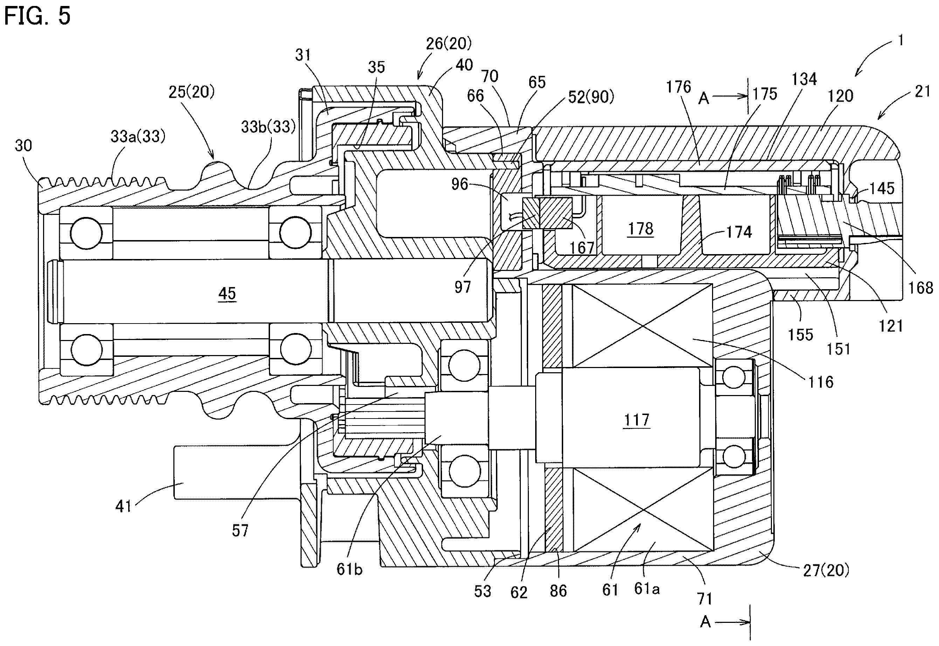

As illustrated in FIGS. 4 and 5, the rotating body 25 is a member in which an output shaft forming portion 30 on the front side and a gear portion 31 on the rear side are integrally formed, and is a substantially cylindrical member having different diameters on the front side and the rear side. That is, the gear portion 31 is a portion having a diameter larger than that of the output shaft forming portion 30, and includes a stepped portion between the output shaft forming portion 30 and the gear portion 31.

The output shaft forming portion 30 includes a belt engagement portion 33 in an outer portion. The belt engagement portion 33 has an uneven shape by a plurality of grooves formed on an outer peripheral surface of the output shaft forming portion 30, and can engage (suspend) the belt member. Note that the rotating body 25 of the present embodiment includes a first belt engagement portion 33a and a second belt engagement portion 33b having different shapes, and can suspend different belt members. For more details, the first belt engagement portion 33a can engage a ribbed belt (not illustrated), and the second belt engagement portion 33b can engage a round belt (not illustrated).

As illustrated in FIG. 5, the gear portion 31 includes a gear forming portion 35 on the internal side. In the gear forming portion 35, an annular continuous uneven portion is formed on the inner peripheral surface, and the uneven portion functions as a tooth row of an internally toothed gear. That is, the gear forming portion 35 is a portion that forms the internally toothed gear, and is a portion that engages (meshes with) an output shaft 61b of a motor 61.

As illustrated in FIG. 4, the receiving member 26 includes a receiving member body portion 40 and a fixing seat portion 41.

The receiving member body portion 40 includes a support shaft portion 45 in a front side portion. The support shaft portion 45 is a substantially round bar-shaped portion extending in a cantilever shape along the front-rear direction, and extends forward. As illustrated in FIG. 5, the support shaft portion 45 is a portion to which the rotating body 25 is attached. That is, the support shaft portion 45 is a portion that rotatably supports (pivotally supports) the rotating body 25, and is a portion that functions as a rotation shaft of the rotating body 25.

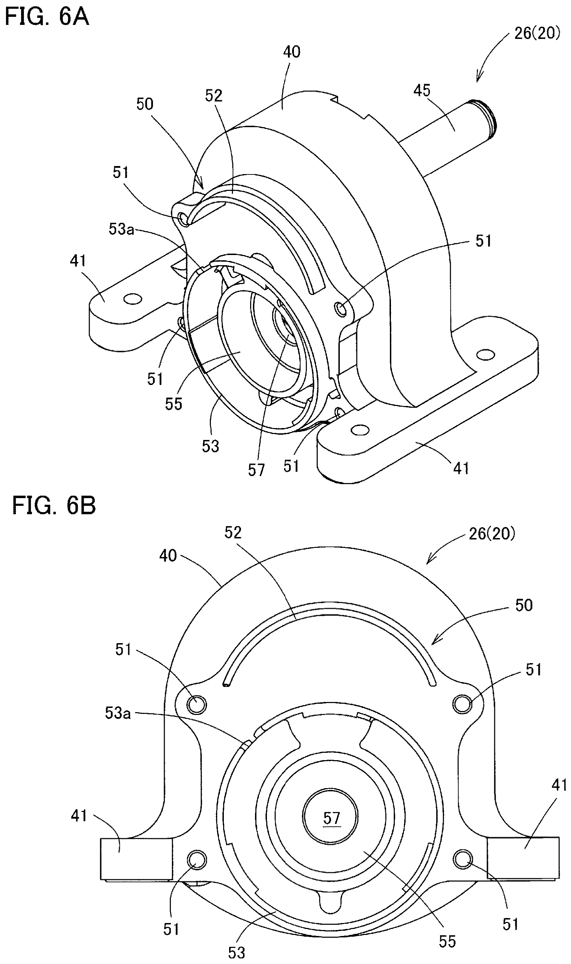

As illustrated in FIGS. 6A & 6B, the receiving member body portion 40 includes a motor fixing portion 50 that is a portion to which the motor unit 27 is attached in a rear side portion. That is, the motor fixing portion 50 is a portion engageable with the motor unit 27.

For more details, the motor fixing portion 50 includes a plurality of fixing holes 51, an upper engagement piece portion 52, and a lower engagement piece portion 53.

Each of the fixing holes 51 is a hole through which a fastening element can be inserted, and is specifically a screw hole.

Note that the term "fastening element" as used herein is a broader concept of a screw, a nail, a bolt, a clamp, a pin, and the like, and is a generic term for machine components that can be unfastened without basically destroying an object to be fastened. Furthermore, the same applies to a "fastening element" in the following description.

The upper engagement piece portion 52 is a thin plate-shaped protrusion piece having a substantially arc cross-sectional shape and extending rearward.

The lower engagement piece portion 53 is a thin plate-shaped protrusion piece that is provided at a position away downward from the upper engagement piece portion 52 and extends rearward in a substantially annular shape. For more details, the lower engagement piece portion 53 includes a missing portion 53a in a part in a circumferential direction, and a portion excluding the missing portion 53a is continuous in an annular shape. Note that the receiving member body portion 40 includes a bearing mounting portion 55 in a portion surrounded by the lower engagement piece portion 53. The bearing mounting portion 55 is a recess recessed forward, and is a portion to which a bearing member (bearing member) can be attached.

Furthermore, as illustrated in FIGS. 5 and 6, the receiving member body portion 40 includes a shaft insertion hole 57. The shaft insertion hole 57 is a hole that penetrates a part of the receiving member body portion 40 in a thickness direction and extends in the front-rear direction. For more details, the shaft insertion hole 57 is a hole including a rear end side opening in a bottom portion of the bearing mounting portion 55 and extending forward from the bottom portion.

As illustrated in FIG. 4, the fixing seat portion 41 is a portion serving as a fixing seat, and is a thick plate-shaped portion having a thickness in the vertical direction. The receiving member 26 of the present embodiment includes two fixing seat portions 41, one at each position spaced apart in the left-right direction. Furthermore, each of the fixing seat portions 41 includes a fastening element insertion hole through which the fastening element is inserted. The fastening element insertion hole is a hole penetrating the fixing seat portion 41 in the thickness direction.

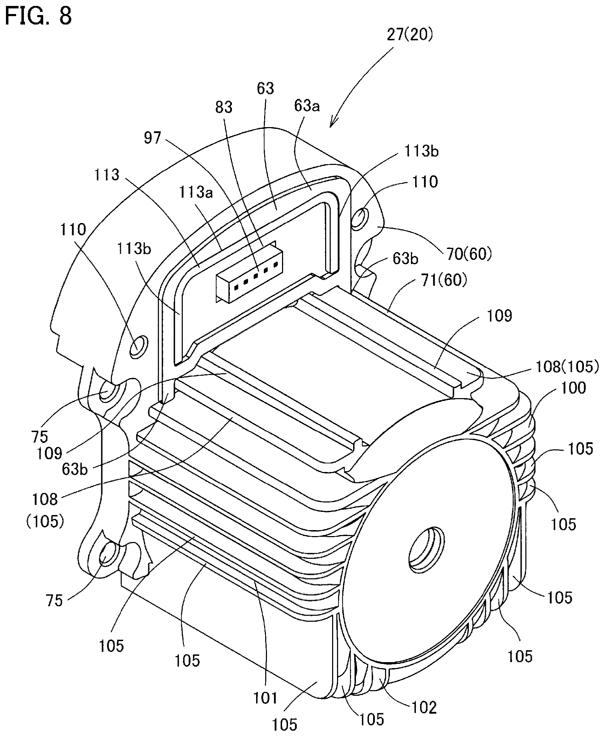

As illustrated in FIGS. 5, 7, and 8, the motor unit 27 includes a motor-side outer member 60 (motor accommodation member), the motor 61 (see FIG. 5), a control auxiliary board 62 (second board), and a sealing member 63 (see FIG. 8).

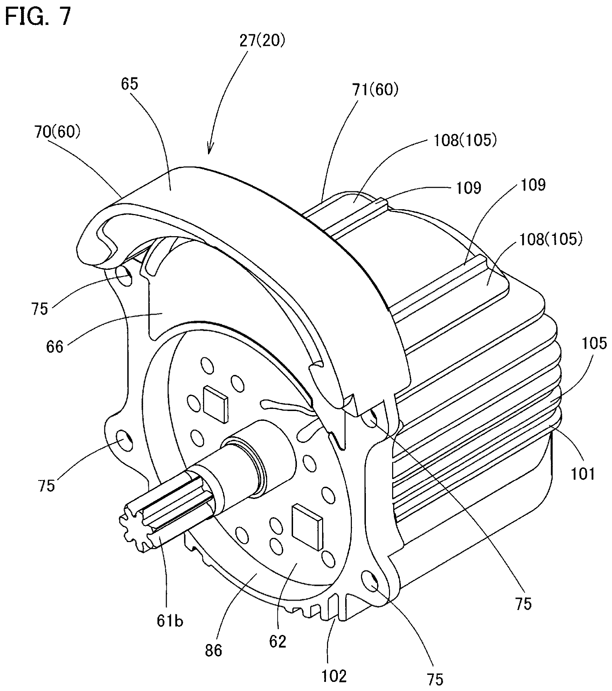

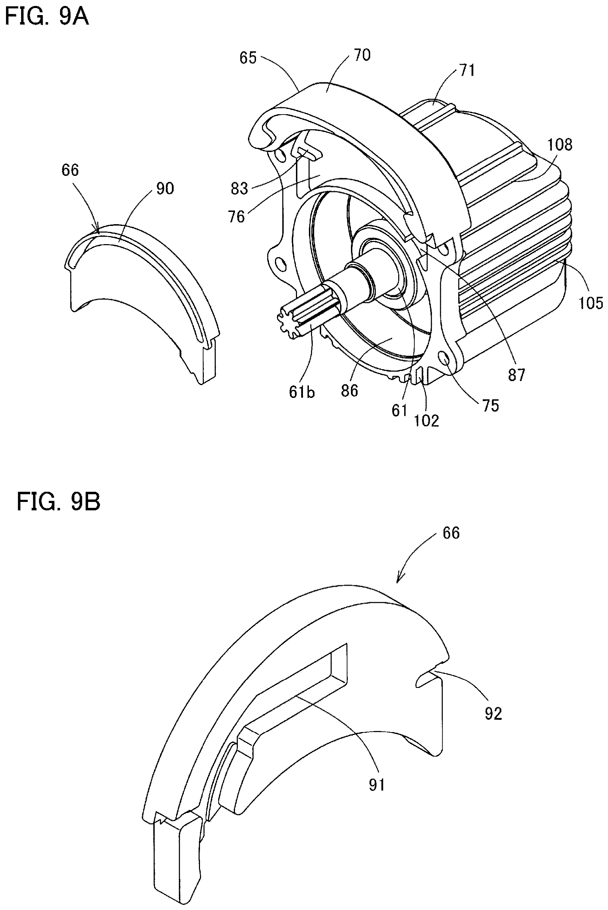

As illustrated in FIG. 7, the motor-side outer member 60 includes a motor-side outer member body 65 and an inner lid portion 66, and the inner lid portion 66 is attachable to and detachable from the motor-side outer member body 65 (see FIG. 9).

Furthermore, when attention is paid to the schematic shape of the motor-side outer member 60, as illustrated in FIGS. 7 and 8, the motor-side outer member 60 includes a motor-side coupling portion 70 forming a front side portion, and a motor-side overhanging portion 71 extending further rearward from a lower rear of the motor-side coupling portion 70. That is, the motor-side outer member 60 is also a member formed by integrating the motor-side coupling portion 70 and the motor-side overhanging portion 71.

That is, the motor-side coupling portion 70 is constituted by the front side portion of the motor-side outer member body 65 and the inner lid portion 66, and is located on the front side of a center portion of the motor-side outer member 60 in the front-rear direction. The motor-side coupling portion 70 engages with the motor fixing portion 50 (see FIG. 6) of the gear box portion (receiving member 26).

Furthermore, the motor-side overhanging portion 71 is a part of the motor-side outer member body 65, and is a portion in which at least a part of the motor 61 is accommodated.

In the present embodiment, the motor-side coupling portion 70 is a portion that is longer in the vertical direction than the motor-side overhanging portion 71 and shorter in the front-rear direction than the motor-side overhanging portion 71, and is a portion that has a generally flat (flange-like) shape. Therefore, a void portion is formed in a portion behind the motor-side coupling portion 70 and above the motor-side overhanging portion 71.

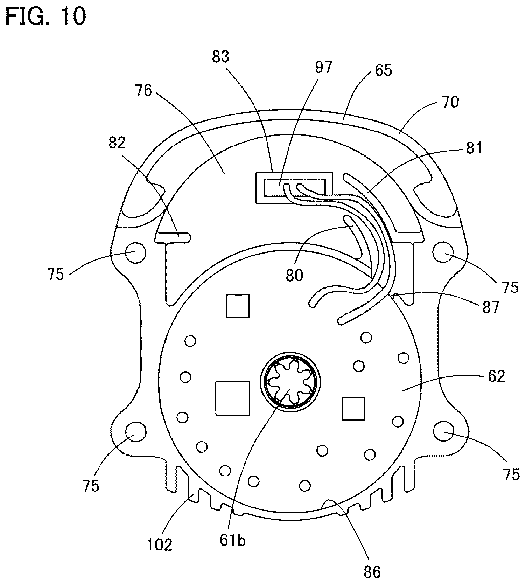

As illustrated in FIGS. 7 and 10, the motor-side coupling portion 70 includes a plurality of fixing holes 75 and a body-side recess 76 (see FIG. 10).

Each of the fixing holes 75 is a through hole penetrating the motor-side coupling portion 70 in the front-rear direction, and is a hole through which a fastening element (screw) is inserted.

The body-side recess 76 is a recess having a substantially crescent shape and recessed rearward.

Furthermore, as illustrated in FIG. 10, the motor-side coupling portion 70 includes a first engagement protrusion portion 80, a second engagement protrusion portion 81, a third engagement protrusion portion 82, and a connector insertion hole portion 83.

All of the first engagement protrusion portion 80, the second engagement protrusion portion 81, and the third engagement protrusion portion 82 are protrusion portions extending forward (toward the front side in FIG. 10) from a bottom portion of the body-side recess 76. The connector insertion hole portion 83 is a through hole penetrating the bottom portion of the body-side recess 76 in the front-rear direction, and is a hole that communicates a space in the body-side recess 76 with the outside.

Moreover, the motor-side coupling portion 70 is provided with a wiring insertion portion 87 at a boundary portion between the body-side recess 76 and a motor accommodation portion 86 (to be described in detail later). The wiring insertion portion 87 is a missing portion in which a part of a partition wall-shaped portion formed at the boundary portion between the body-side recess 76 and the motor accommodation portion 86 is missing, and a part of the wiring can be disposed inside, and a space in the body-side recess 76 communicates with the motor accommodation portion 86.

The motor-side outer member 60 includes the motor accommodation portion 86. As illustrated in FIGS. 5 and 9, the motor accommodation portion 86 is a space that accommodates at least a part of the motor 61, and is a space having a substantially circular lateral cross-sectional shape and extending in the front-rear direction. A part of the motor accommodation portion 86 of the present embodiment is located inside the motor-side coupling portion 70, and the other most part is located inside the motor-side overhanging portion 71. In the present embodiment, most of the motor 61 (a portion excluding a leading end side of the output shaft 61b) and the control auxiliary board 62 are accommodated in the motor accommodation portion 86 (see FIGS. 5 and 7).

As illustrated in FIG. 9, the inner lid portion 66 is a plate-shaped member in which both principal surfaces have a substantially crescent shape, and is a member attachable to and detachable from the motor-side outer member body 65. Note that the inner lid portion 66 of the present embodiment is formed of a resin having flexibility and elasticity such as rubber, and is a member having higher flexibility (lower rigidity) than the motor-side outer member 60.

As illustrated in FIG. 9A, a gear coupling engagement portion 90 is formed on a front side portion of the inner lid portion 66. The gear coupling engagement portion 90 is a recess recessed rearward and extends in a mountain shape. The gear coupling engagement portion 90 is an engagement portion paired with the upper engagement piece portion 52 (see FIG. 6) of the motor fixing portion 50 described above.

Furthermore, as illustrated in FIG. 9B, a first lid-side recess 91 and a second lid-side recess 92 are formed in a rear side portion of the inner lid portion 66. The first lid-side recess 91 and the second lid-side recess 92 are both recesses recessed forward.

Here, a wiring accommodation portion 96 (see FIG. 5) is formed by attaching the inner lid portion 66 to the body-side recess 76 formed in the motor-side coupling portion 70 (motor-side outer member body 65). The wiring accommodation portion 96 is a portion capable of accommodating a part of a motor-side connector 97 (see FIGS. 8 and 10) and a wiring member (see FIG. 10) extending from the motor-side connector 97.

For more details, when the inner lid portion 66 is attached, the first engagement protrusion portion 80 and the second engagement protrusion portion 81 (see FIG. 10) are inserted into the first lid-side recess 91 (see FIG. 9B), and the third engagement protrusion portion 82 (see FIG. 10) is inserted into the second lid-side recess 92 (see FIG. 9B).

That is, the plurality of engagement portions (first lid-side recess 91 and second lid-side recess 92) on a side of the inner lid portion 66 and the plurality of engagement portions (first engagement protrusion portion 80, second engagement protrusion portion 81, third engagement protrusion portion 82) on a side of the motor-side outer member body 65 are engaged with each other.

At this time, the third engagement protrusion portion 82 is in a state of substantially exactly entering the second lid-side recess 92, whereas the first engagement protrusion portion 80 and the second engagement protrusion portion 81 are in a state of partially entering the first lid-side recess 91. Therefore, in a state where the inner lid portion 66 is attached, a space is formed in a portion from a portion located in front of the connector insertion hole portion 83 to the wiring insertion portion 87 in the inner lid portion 66. This space serves as the wiring accommodation portion 96 that accommodates a part of the motor-side connector 97 and a part of the wiring member extending from the motor-side connector 97 to the control auxiliary board 62.

That is, the motor unit 27 of the present embodiment includes the wiring accommodation portion 96 and the motor-side connector 97, and includes the wiring member that connects the motor-side connector 97 and the control auxiliary board 62. Then, the motor-side connector 97 is disposed across the inside and the outside of the motor-side outer member 60 via the connector insertion hole portion 83, and a part thereof projects outward from the connector insertion hole portion 83, and a part thereof is disposed in front of the connector insertion hole portion 83. Furthermore, the wiring member connecting the motor-side connector 97 and the control auxiliary board 62 is mostly disposed in the wiring accommodation portion 96.

In the present embodiment, as described above, the inner lid portion 66 is a highly flexible member, and the inner lid portion 66 itself functions as a sealing member (packing) that prevents water or the like from entering the wiring accommodation portion 96. That is, an edge portion (end surface portion located between both principal surfaces) of the inner lid portion 66 and a surface (inner peripheral surface) surrounding the body-side recess 76 on the side of the motor-side outer member 60 are brought into close contact with each other, and intrusion of water or the like into the wiring accommodation portion 96 is prevented.

Note that the inner lid portion 66 is not limited to have a size that can be substantially exactly fitted into the body-side recess 76, and the inner lid portion 66 may be a member formed larger than the body-side recess 76 in a natural state where no external force is applied. That is, the inner lid portion 66 is elastically deformed and attached when fitted into the body-side recess 76, and may have a size that cannot be fitted into the body-side recess 76 in a state of not being elastically deformed.

As described above, the motor unit 27 includes a first sealing portion (sealing portion) that prevents water or the like from entering the wiring accommodation portion 96 in front of a front side opening portion of the connector insertion hole portion 83.

Here, focusing on an outer peripheral surface of the motor-side overhanging portion 71, as illustrated in FIG. 8, the motor-side overhanging portion 71 of the present embodiment is formed with three heat dissipation portions including a first motor-side heat dissipation portion 100 (heat dissipation portion), a second motor-side heat dissipation portion 101 (heat dissipation portion), and a third motor-side heat dissipation portion 102 (heat dissipation portion).

Each of the heat dissipation portions is a portion formed to have a large surface area, and in the present embodiment, the heat dissipation portion is a portion having an uneven shape. For more details, the heat dissipation portion is a portion formed such that a plurality of ridge portions 105 extending in the front-rear direction is arranged at intervals, and includes the plurality of ridge portions 105 and gap portions adjacent to the ridge portions 105.

Note that, for convenience of drawing, only some ridge portions 105 are denoted by reference signs, and other reference signs are omitted. Furthermore, in the following description, in a case where there is a plurality of similar components, reference signs are omitted as necessary.

The first motor-side heat dissipation portion 100 is a heat dissipation portion formed on a right side surface of the motor-side overhanging portion 71, and for more details, the plurality of ridge portions 105 and the gap portions are formed in an upper side portion of the right side surface.

The second motor-side heat dissipation portion 101 is a heat dissipation portion formed on a left side surface of the motor-side overhanging portion 71, and for more details, the plurality of ridge portions 105 and the gap portions are formed in an upper side portion of the left side surface.

The third motor-side heat dissipation portion 102 is a heat dissipation portion formed on a lower surface of the motor-side overhanging portion 71, and for more details, the plurality of ridge portions 105 and the gap portions are formed in each of a right end side portion and a left end side portion of the lower surface. That is, in the third motor-side heat dissipation portion 102, the plurality of ridge portions 105 and the gap portions are formed in respective portions spaced apart from each other in the left-right direction of the lower surface.

That is, the motor-side overhanging portion 71 includes a motor-side first wall portion forming a right side wall of the motor-side overhanging portion 71, a motor-side second wall portion forming a left side wall, a motor-side third wall portion connecting the right side wall and the left side wall to form a lower wall, and a motor-side fourth wall portion connecting the right side wall and the left side wall to form an upper wall. Then, a heat dissipation portion is formed on an outer surface of each of the motor-side first wall portion, the motor-side second wall portion, and the motor-side third wall portion except for the motor-side fourth wall portion.

That is, the heat dissipation portions are formed on three sides excluding the upper side out of four sides of the upper, lower, left, and right surrounding the outer peripheral surface of the motor-side overhanging portion 71. Here, as described above, the motor-side overhanging portion 71 is a portion in which the motor 61 is accommodated. That is, the heat dissipation portions are formed on three sides of the portion surrounding the outer side of the motor 61. For more details, the heat dissipation portions are formed on three sides except for the side of a control board 175 (see FIG. 5).

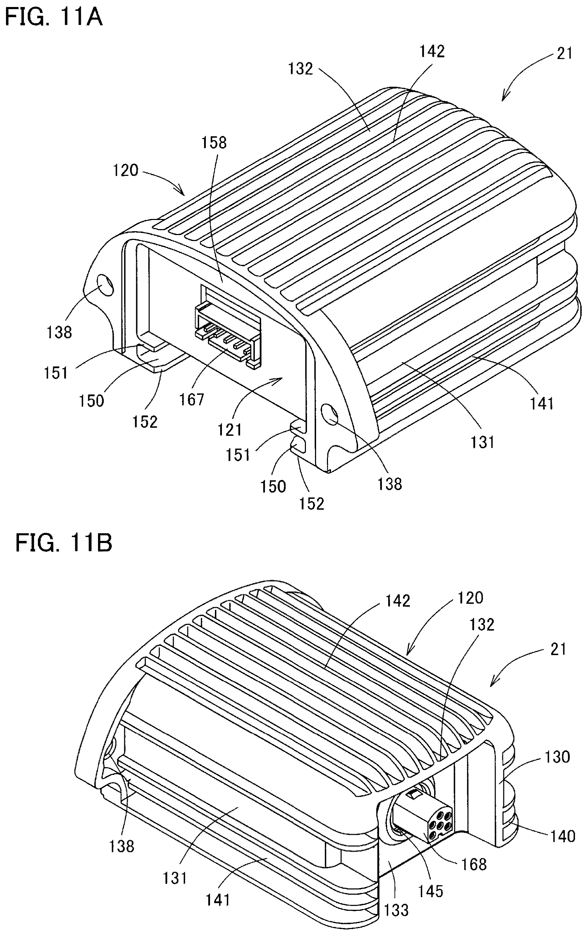

The motor-side outer member 60 of the present embodiment includes a motor-side engagement portion 108 (second engagement portion) that engages with a board-side engagement portion 150 (first engagement portion, see FIG. 11A, which will be described in detail later) of the board unit 21.

The motor-side engagement portions 108 are a pair of two ridge portions 105 formed at positions spaced apart in the left-right direction, and both the motor-side engagement portions are the ridge portions 105 extending in the front-rear direction.

In the present embodiment, the ridge portion 105, which is one of the plurality of ridge portions 105, is a part of the first motor-side heat dissipation portion 100, and is located at the uppermost position among the plurality of ridge portions, is one ridge portion 105 of the motor-side engagement portion 108.

Furthermore, the ridge portion 105, which is one of the plurality of ridge portions 105, is a part of the second motor-side heat dissipation portion 101, and is located at the uppermost position among the plurality of ridge portions, is the other ridge portion 105 of the motor-side engagement portion 108.

That is, in the geared motor 1 of the present embodiment, the ridge portion 105 constituting a part of the heat dissipation portion also functions as the motor-side engagement portion 108.

Moreover, the motor-side outer member 60 of the present embodiment includes an attachment protrusion portion 109. The attachment protrusion portion 109 is a protrusion portion projecting upward from an upper surface of the ridge portion 105, is the motor-side engagement portion 108, and is a protrusion having a substantially quadrangular lateral cross-sectional shape and extending in the front-rear direction.

Note that, in the present embodiment, a length in the front-rear direction of the attachment protrusion portion 109 is equal to a length in the front-rear direction of the ridge portion 105 (ridge portion 105 located at an uppermost portion of the motor-side first heat dissipation portion 100 and the motor-side second heat dissipation portion 101) continuous with a lower end portion of the attachment protrusion portion 109. Then, the attachment protrusion portion 109 projects upward from the front end portion to the rear end portion of the upper surface of the ridge portion 105, which is continuous with the lower end portion of the attachment protrusion portion 109.

Furthermore, the motor-side outer member 60 is a portion on a rear upper side of the motor-side coupling portion 70, and includes a board fixing hole 110 in a portion above the motor-side overhanging portion 71. In the present embodiment, a total of two board fixing holes 110 are provided one by one at positions separated in the left-right direction. The board fixing hole 110 is a bottomed hole including an opening on the rear end side and extending forward, and is a hole through which a fastening element (screw) can be inserted. That is, the inner peripheral surface includes threads (not illustrated).

Furthermore, as illustrated in FIG. 8, the motor-side outer member 60 includes a locking protrusion portion 113.

The locking protrusion portion 113 is a rear side surface of the motor-side coupling portion 70, and is a protrusion portion projecting rearward from a portion located above the motor-side overhanging portion 71. The locking protrusion portion 113, which is extending in a substantially U shape, includes an upper extension portion 113a extending in the left-right direction on an upper side, and two lower extension portions 113b respectively extending downward (toward the motor-side overhanging portion 71) from both end portions of the upper extension portion 113a in the left-right direction.

Furthermore, the locking protrusion portion 113 is disposed so as to surround three sides of the periphery of the connector insertion hole portion 83 in a plan view viewed from a predetermined direction (plan view viewed from the rear with a line-of-sight direction as the front-rear direction). That is, the upper extension portion 113a is formed above the connector insertion hole portion 83, and one of the lower extension portions 113b is formed at a position further away outward in the left-right direction than one end portion of the connector insertion hole portion 83 in the left-right direction. Then, the other of the lower extension portions 113b is formed at a position further away outward in the left-right direction than the other end portion of the connector insertion hole portion 83 in the left-right direction.

The motor 61 is a brushless motor, and includes a motor body portion 61a having a stator 116, a rotor 117, and the output shaft 61b as illustrated in FIG. 5. Then, a coil is used as the stator 116, and a permanent magnet is used as the rotor 117, thereby showing the figure such that the rotor 117 is wound around a part of the output shaft 61b. That is, the rotor 117 and the output shaft 61b are integrated.

Therefore, the output shaft 61b rotates with the rotation of the rotor 117. The output shaft 61b extends from the inside to the outside of the motor accommodation portion 86, and the front side portion is located in front of the motor accommodation portion 86.

The control auxiliary board 62 is a board that assists control of the motor 61 by the control board 175 (board, first board) described later. Specifically, the control auxiliary board 62 is a board that receives a signal from a Hall element (not illustrated) disposed in the vicinity of the motor 61, that is, a board that receives a signal from a sensor that detects a rotational position of the motor 61. The control auxiliary board 62 can transmit and receive signals to and from the control board 175.

The sealing member 63 is formed of a resin having flexibility and elasticity such as rubber, and is a thin plate-shaped member continuous in a substantially annular shape (substantially quadrangular annular shape) as illustrated in FIG. 8. The sealing member 63 is a member that functions as a so-called packing (described in detail later).

For more details, the sealing member 63 is formed to have higher flexibility (lower rigidity) than the motor-side outer member 60, and includes a sealing member body portion 63a continuous in a substantially quadrangular annular shape, and two sealing extension portions 63b. Each of the sealing extension portions 63b is a portion extending downward from a lower side portion of the sealing member body portion 63a, and one sealing extension portion 63b extends downward from a portion on one end side (a portion on a left end side) in the left-right direction of the lower side portion of the sealing member body portion 63a.

Furthermore, the other sealing extension portion 63b extends downward from a portion on the other end side (a portion on a right end side) in the left-right direction of the lower side portion of the sealing member body portion 63a. Therefore, a void portion is formed below the sealing member body portion 63a and in a portion between the two sealing extension portions 63b.

The sealing member 63 of the present embodiment is attached to the motor-side outer member 60 in a state of being locked to the locking protrusion portion 113. That is, the locking protrusion portion 113 is put into a state of being inserted into an inner hole portion of the sealing member body portion 63a. At this time, an outer surface of the locking protrusion portion 113 in a direction orthogonal to (intersecting) a projecting direction of the locking protrusion portion 113 and a part of an inner peripheral surface of the inner hole portion of the sealing member body portion 63a are brought into close contact with each other.

Note that the outer surface of the locking protrusion portion 113 in the direction orthogonal to the projecting direction is a surface extending from one side surface in the left-right direction of the locking protrusion portion 113 via the upper surface to the other side surface in the left-right direction, and is a surface extending in a substantially U-shape.

That is, an outer side surface (left side surface) in the left-right direction of one (left) lower extension portion 113b, an upper side surface of the upper extension portion 113a, and an outer side surface (right side surface) in the left-right direction of the other (left) lower extension portion 113b are included. Moreover, a curved surface located between the upper side surface of the upper extension portion 113a and the outer side surface of each of the lower extension portions 113b is included.

In addition, the front side portion of the motor-side engagement portion 108 and the front side portions of the two attachment protrusion portions 109 enter the void portion formed between the two sealing extension portions 63b.

As described above, the sealing member 63 is attached in a state of being restricted from moving in the vertical direction and the left-right direction by the locking protrusion portion 113, a part of the motor-side engagement portion 108, and a part of each of the two attachment protrusion portions 109. Furthermore, the front side surface of the sealing member 63 is in close contact with the rear side surface of the motor-side coupling portion 70. That is, the sealing member 63 is restricted from moving forward by the motor-side coupling portion 70.

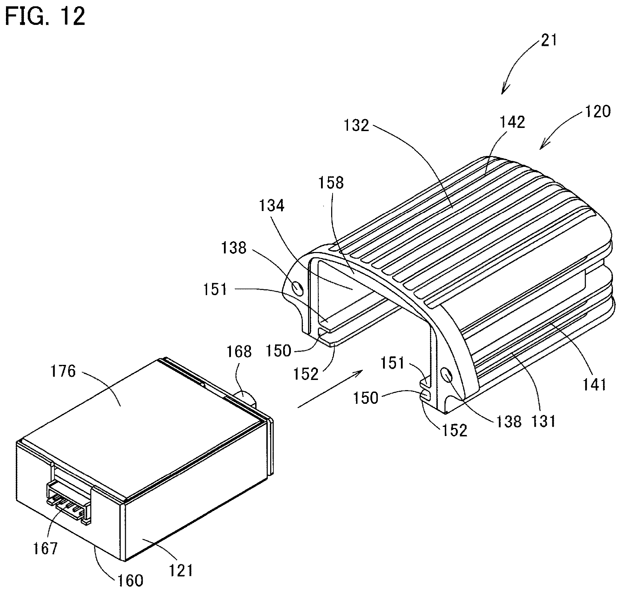

As illustrated in FIGS. 11 and 12, the board unit 21 includes a board-side outer member 120 (board accommodation member, external accommodation member) and a board-side internal accommodation member 121 (board accommodation member, internal accommodation member).

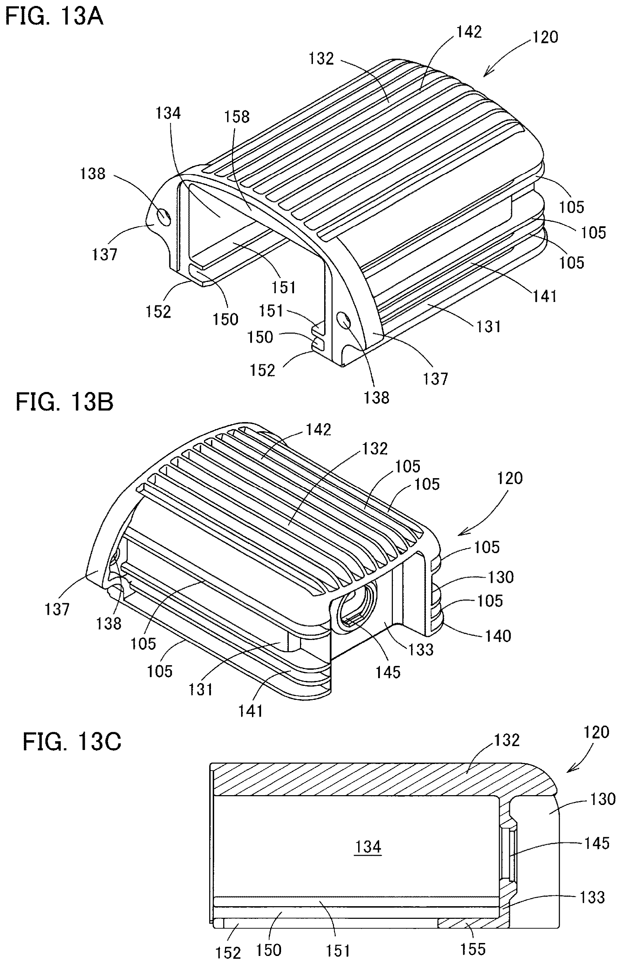

As illustrated in FIG. 13, the board-side outer member 120 includes a board-side first wall portion 130 forming a right side wall, a board-side second wall portion 131 forming a left side wall, a board-side third wall portion 132 forming an upper wall, and a board-side fourth wall portion 133 forming a rear wall. The board-side outer member 120 is a box-shaped member in which the front side that is one end side in the longitudinal direction, and most of the lower side are opened.

Therefore, the board-side outer member 120 includes a board-side internal space portion 134 surrounded by the board-side first wall portion 130, the board-side second wall portion 131, the board-side third wall portion 132, and the board-side fourth wall portion 133 therein. The board-side internal space portion 134 is a space including an opening portion on the front end side, which is one end side in the longitudinal direction of the board-side outer member 120, and including a rear end side portion, which is the other end side, closed by the board-side fourth wall portion 133.

That is, the board-side first wall portion 130 and the board-side second wall portion 131 are standing wall portions facing each other with a space therebetween in a predetermined direction (left-right direction), and the board-side first wall portion 130, the board-side second wall portion 131, and the board-side third wall portion 132 form a portion having a substantially U-shaped cross-sectional shape and extending in the front-rear direction. The board-side first wall portion 130, the board-side second wall portion 131, and the board-side fourth wall portion 133 form peripheral walls (side walls) surrounding three sides of the board-side internal space portion 134.

Each of front end side portions of the board-side first wall portion 130 and the board-side second wall portion 131 is provided with an attachment piece portion 137 that rises outward. That is, the board-side outer member 120 includes the attachment piece portion 137 that projects from the board-side first wall portion 130 toward one side (right side) in the left-right direction, and the attachment piece portion 137 that projects from the board-side second wall portion 131 toward the other side (left side) in the left-right direction. Each of the attachment piece portions 137 is a plate-shaped portion having a thickness in the front-rear direction, and includes a board unit fixing hole 138. The board unit fixing hole 138 is a hole penetrating the attachment piece portion 137 in the thickness direction, and is a hole through which the fastening element can be inserted.

The board-side outer member 120 of the present embodiment includes a first board-side heat dissipation portion 140 (heat dissipation portion), a second board-side heat dissipation portion 141 (heat dissipation portion), and a third board-side heat dissipation portion 142 (heat dissipation portion).

Similarly to the heat dissipation portions described above, these heat dissipation portions are portions formed to have a large surface area, and are portions having an uneven shape. That is, the plurality of ridge portions 105 and the gap portions adjacent to the ridge portions 105 are provided.

The first board-side heat dissipation portion 140 is a heat dissipation portion formed on an outer surface of the board-side first wall portion 130. For more details, as illustrated in FIG. 13B, the first board-side heat dissipation portion 140 includes the plurality of (three) ridge portions 105 and a plurality of (two) gap portions formed in a lower side portion of the outer surface of the board-side first wall portion 130. Furthermore, one ridge portion 105 and one gap portion formed in the upper side portion are included.

The second board-side heat dissipation portion 141 is a heat dissipation portion formed on an outer surface of the board-side second wall portion 131. The second board-side heat dissipation portion 141 is a portion having the same shape as the first board-side heat dissipation portion 140, and a detailed description thereof will be omitted.

The third board-side heat dissipation portion 142 is a heat dissipation portion formed on an outer surface of the board-side third wall portion 132, and is formed to include the plurality of ridge portions 105 and the plurality of gap portions.

Here, the board-side internal space portion 134 is a portion where the control board 175 is disposed (see FIG. 5, which will be described in detail later). That is, the heat dissipation portions are formed on three sides except for the lower side out of four sides of the upper, lower, left, and right surrounding the board-side internal space portion 134. In other words, the heat dissipation portions are formed on three sides of a portion surrounding the outer side of the control board 175, that is, the three sides excluding the side of the motor 61 (see FIG. 5).

The board-side fourth wall portion 133 includes a connector insertion hole portion 145. The connector insertion hole portion 145 is a through hole that penetrates the board-side fourth wall portion 133 in the thickness direction (front-rear direction), and is a hole that communicates the board-side internal space portion 134 with the outside.

Furthermore, as illustrated in FIG. 13A, the board-side engagement portion 150 is provided inside the board-side outer member 120.

The board-side engagement portions 150 are formed at positions separated in the left-right direction, and are a pair of groove portions in two each extending in the front-rear direction. The board-side engagement portion 150 is an engagement portion that forms a pair with the motor-side engagement portion 108 (see FIG. 8) and engages with each other.

For more details, the board-side outer member 120 includes a first groove forming protrusion portion 151 and a second groove forming protrusion portion 152 that project from an inner surface of each of the board-side first wall portion 130 and the board-side second wall portion 131. The first groove forming protrusion portion 151 and the second groove forming protrusion portion 152 are disposed at intervals in the vertical direction, and a groove portion of the board-side engagement portion 150 is formed between the first groove forming protrusion portion 151 and the second groove forming protrusion portion 152.

That is, one groove portion of the board-side engagement portion 150 is formed between the first groove forming protrusion portion 151 and the second groove forming protrusion portion 152 that project from the inner surface of the board-side first wall portion 130. Then, the other groove portion of the board-side engagement portion 150 is formed between the first groove forming protrusion portion 151 and the second groove forming protrusion portion 152 that project from the inner surface of the board-side second wall portion 131.

Note that, as described above, most of the lower side of the board-side outer member 120 is open. For more details, as illustrated in FIGS. 13A and 13C, a portion located between the two second groove forming protrusion portions 152 is a void portion, and the board-side internal space portion 134 and the outside are continuous in the vertical direction.

On the other hand, as illustrated in FIG. 13C, the board-side outer member 120 includes a lower wall portion 155 in the rear lower portion. Then, a portion on the rear side of the board-side internal space portion 134 is closed at its lower portion by the lower wall portion 155. That is, the lower wall portion 155 is located behind the void portion formed between the two second groove forming protrusion portions 152, and is provided so as to connect the board-side first wall portion 130 and the board-side second wall portion 131, and the rear end side portion forms a lower wall portion continuous with the board-side fourth wall portion 133. In other words, the lower wall portion of the board-side outer member 120 is provided behind the missing portion that continues from the inside to the outside on the lower side (closer to the board-side fourth wall portion 133 than the missing portion).

Furthermore, as illustrated in FIG. 13A, the board-side outer member 120 includes a sealing recess 158 in the front side portion.

The sealing recess 158 is a recess recessed rearward from the front surface of the board-side outer member 120. For more details, the board-side outer member 120 includes a front surface portion (gear side surface portion) including a portion where a front side opening of the board unit fixing hole 138 is formed, and the sealing recess 158 is a recess recessed rearward from the front surface portion.

Furthermore, a bottom portion of the sealing recess 158, a front end portion of the board-side internal space portion 134, a front end portion of the board-side engagement portion 150, a front end portion of the first groove forming protrusion portion 151, and a front end portion of the second groove forming protrusion portion 152 are located at the same position in the front-rear direction. That is, each of the board-side internal space portion 134, the board-side engagement portion 150, the first groove forming protrusion portion 151, and the second groove forming protrusion portion 152 extends rearward from the bottom portion of the sealing recess 158.

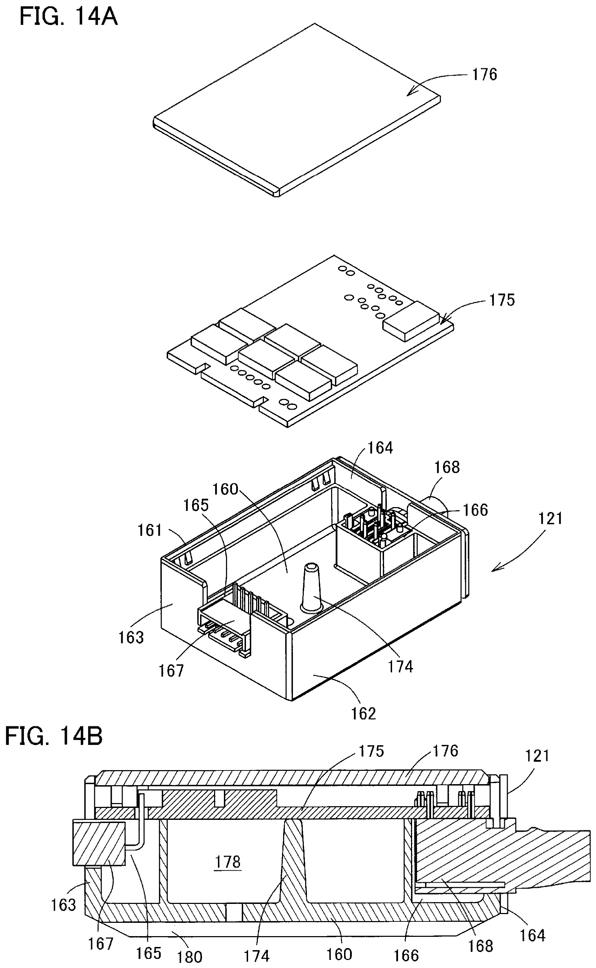

As illustrated in FIG. 14A, the board-side internal accommodation member 121 is a bottomed box-shaped member whose upper side is open. That is, the board-side internal accommodation member 121 includes an internal-side bottom wall portion 160 (motor-side wall portion) forming a bottom wall, an internal-side first wall portion 161, an internal-side second wall portion 162, an internal-side third wall portion 163, and an internal-side fourth wall portion 164, each forming a right side wall, a left side wall, a front wall, and a rear wall, respectively.

The internal-side first wall portion 161, the internal-side second wall portion 162, the internal-side third wall portion 163, and the internal-side fourth wall portion 164 are all portions projecting upward from an edge portion of the internal-side bottom wall portion 160, and are annularly (quadrangular annularly) continuous.

Furthermore, the internal-side first wall portion 161 and the internal-side second wall portion 162 face each other with a distance therebetween in the left-right direction, and the internal-side third wall portion 163 and the internal-side fourth wall portion 164 face each other with a distance therebetween in the front-rear direction. The internal-side third wall portion 163 extends so as to connect between front end side portions of the internal-side first wall portion 161 and the internal-side second wall portion 162, and the internal-side fourth wall portion 164 extends so as to between connect rear end side portions of the internal-side first wall portion 161 and the internal-side second wall portion 162.

The, the board-side internal accommodation member 121 includes an internal space above the internal-side bottom wall portion 160 and formed in a portion surrounded by the internal-side first wall portion 161, the internal-side second wall portion 162, the internal-side third wall portion 163, and the internal-side fourth wall portion 164. The board-side internal accommodation member 121 is a space continuous with the internal space and the outside via an upper opening portion.

Here, the board-side internal accommodation member 121 includes a first connector mounting portion 165 inside the internal-side third wall portion 163 (on the front side of the board-side internal accommodation member 121), and includes a second connector mounting portion 166 inside the internal-side fourth wall portion 164 (on the rear side of the board-side internal accommodation member 121). The first connector mounting portion 165 is formed to include a missing portion communicating the inside and the outside formed in the internal-side third wall portion 163, and the second connector mounting portion 166 is formed to include a missing portion communicating the inside and the outside formed in the internal-side fourth wall portion 164.

A board-side first connector 167 and a board-side second connector 168 are attached to the first connector mounting portion 165 and the second connector mounting portion 166, respectively.

The board-side first connector 167 is disposed across the inside and the outside of the board-side internal accommodation member 121 via the missing portion of the internal-side third wall portion 163, and a part thereof is located outside (on a front side of) an outer surface of the internal-side third wall portion 163 and a part thereof is disposed inside the board-side internal accommodation member 121. The board-side first connector 167 is a connector connectable to the motor-side connector 97 (see FIG. 8B).

The board-side second connector 168 is disposed across the inside and the outside of the board-side internal accommodation member 121 via the missing portion of the internal-side fourth wall portion 164, and a part thereof is located outside (on a rear side of) an outer surface of the internal-side fourth wall portion 164 and a part thereof is disposed inside the board-side internal accommodation member 121. The board-side second connector 168 is a connector that can connect one end side of an external wiring member 170 (see FIG. 2) that connects the control board 175 with external equipment such as a PLC.

Furthermore, as illustrated in FIG. 14, the board-side internal accommodation member 121 includes a support protrusion portion 174 extending upward from the internal-side bottom wall portion 160.

As illustrated in FIG. 5 and the like, the board unit 21 of the present embodiment can be in an accommodated state in which the control board 175 is accommodated in the board-side outer member 120. The accommodated state of the present embodiment is a state in which the control board 175 is attached to (accommodated in) the board-side internal accommodation member 121, a heat sink 176 is disposed on the control board 175, and the control board 175 is accommodated in the board-side outer member 120 together with the board-side internal accommodation member 121 and the heat sink 176.

The control board 175 is a board for controlling the operation of the motor 61, and is a board capable of outputting a signal for controlling the operation to the motor 61. For more details, the control board 175 is a board capable of transmitting a signal instructing a rotation speed of the rotor 117 and a rotation direction of the rotor 117 to the motor 61 based on a signal or the like transmitted from external equipment via the external wiring member 170.

The heat sink 176 is a metal thin plate-shaped member and is disposed on the control board 175 as illustrated in FIG. 14. That is, when each portion of the control board 175 generates heat, the heat is conducted to the heat sink 176, and the heat is exchanged with air existing in the periphery to dissipate the heat.

When the board unit 21 is put into an accommodated state, at least a part (the whole in the present embodiment) of the control board 175 is disposed in the internal space of the board-side internal accommodation member 121, and the control board 175 is put into a state of being accommodated in the board-side internal accommodation member 121. In the present embodiment, the control board 175 is placed on the first connector mounting portion 165, the second connector mounting portion 166, and the support protrusion portion 174, and is put into a state of being disposed at a position separated upward from the internal-side bottom wall portion 160.

As a result, a void portion 178 (void) is formed between the control board 175 and the internal-side bottom wall portion 160. Here, the internal-side bottom wall portion 160 is a wall portion located closer to a side of the motor 61 than the control board 175 in the geared motor 1 (see FIG. 5). That is, the void portion 178 is formed in a portion adjacent to the side of the motor 61 of the control board 175.

Furthermore, in the accommodated state, the heat sink 176 is put into a state of being disposed on the control board 175, and at least a part (a part on the lower side in the present embodiment) of the heat sink 176 is put into a state of being disposed in the internal space of the board-side internal accommodation member 121. Note that, in the present embodiment, a heat dissipation sheet (not illustrated) is disposed above a part of the control board 175 (for more details, a part where a plurality of ROMs is disposed). That is, the heat dissipation sheet is located between a part of the control board 175 and the heat sink 176 (detailed illustration is omitted).

In the present embodiment, the heat sink 176 is disposed so that a lower surface of the heat sink 176 does not come into contact with the control board 175, but it is also conceivable to bring the heat sink 176 into contact with the control board 175. In this case, the heat sink 176 may be disposed so as to be in direct contact with a part of the control board 175 and located on both sides with the heat dissipation sheet interposed therebetween with another part of the control board 175.

Then, the board-side internal accommodation member 121 is accommodated in the board-side outer member 120 together with the control board 175 and the heat sink 176 (see FIGS. 12 and 14B). In the present embodiment, the board-side internal accommodation member 121 can be attached to and detached from the board-side outer member 120 only by sliding one of the board-side internal accommodation member 121 and the board-side outer member 120 with respect to the other.

In other words, the board-side internal accommodation member 121, the control board 175, and the heat sink 176 constitute an internal accommodation object to be accommodated in the board-side outer member 120. Then, in the present embodiment, it is possible to accommodate and take out the internal accommodation object only by sliding one of the board-side outer member 120 and the internal accommodation object with respect to the other.

For more details, the internal-side bottom wall portion 160 of the board-side internal accommodation member 121 is located above the two first groove forming protrusion portions 151, and the board-side internal accommodation member 121 is placed on the two first groove forming protrusion portions 151. At this time, as illustrated in FIG. 11B, the board-side second connector 168 is inserted into the connector insertion hole portion 145, and a part of the board-side second connector 168 projects rearward from the rear side opening of the connector insertion hole portion 145.

As described above, the board unit 21 is in the accommodated state.

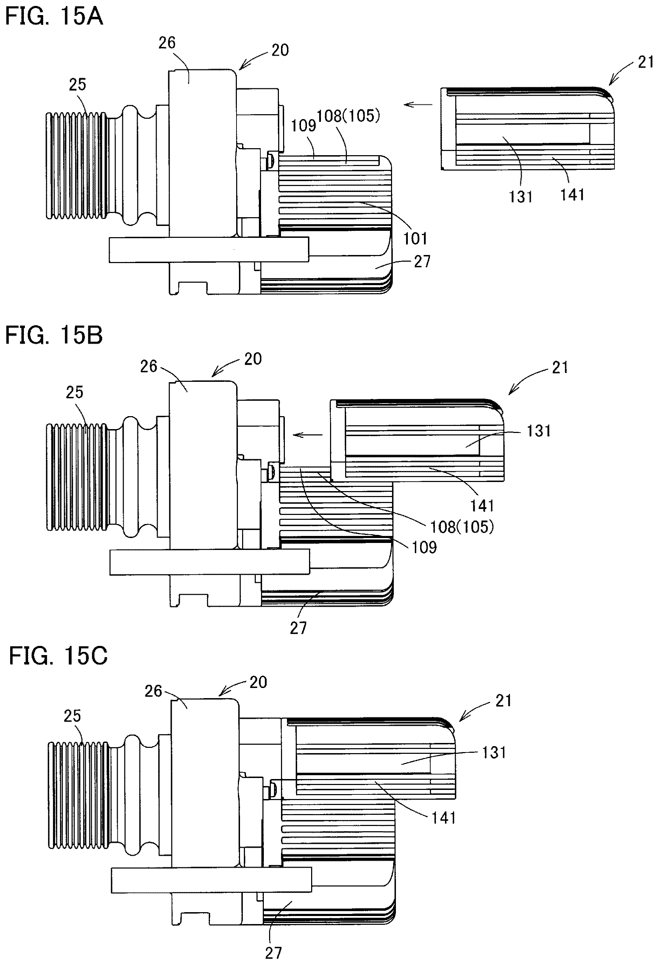

In the geared motor 1 of the present embodiment, the board unit 21 in the accommodated state can be attached to and detached from the geared motor body 20 (motor unit 27). That is, as illustrated in FIG. 15 and the like, the geared motor 1 can be shifted between an attached state in which the board unit 21 is attached to the geared motor body 20 and a detached state in which the board unit 21 is detached from the geared motor body 20.

As described above, in the geared motor body 20, the motor unit 27 is attached to the gear box portion in which the rotating body 25 is attached to the receiving member 26 (see FIG. 5).

That is, as illustrated in FIG. 5, the geared motor body 20 is pivotally supported by the support shaft portion 45 in a state where the rotating body 25 is rotatable.

Furthermore, as illustrated in FIG. 5, the output shaft 61b extends from the rear side to the front side of the shaft insertion hole 57 through the shaft insertion hole 57, and the front side portion of the output shaft 61b is engaged (meshed) with the gear forming portion 35 of the rotating body 25.

Furthermore, the motor fixing portion 50 (see FIG. 6) of the receiving member 26 and the motor-side coupling portion 70 of the motor unit 27 are engaged with each other. That is, as illustrated in FIG. 5, the upper engagement piece portion 52 is substantially exactly fitted into the gear coupling engagement portion 90. Furthermore, as illustrated in FIG. 5, the lower engagement piece portion 53 is inserted into the motor accommodation portion 86 of the motor-side outer member 60, and an outer peripheral surface of the lower engagement piece portion 53 is put into a state of being in contact with an inner peripheral surface surrounding the motor accommodation portion 86.

Moreover, each of the plurality of fixing holes 51 (see FIG. 6) of the receiving member 26 and each of the plurality of fixing holes 75 of the motor-side coupling portion 70 overlap each other in the front-rear direction to form communication holes (detailed illustration is omitted), and a fastening element (screw) is inserted into each of the communication holes.

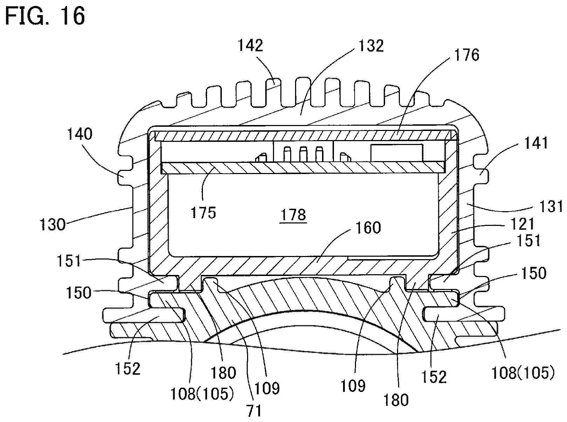

When the geared motor 1 is shifted from the detached state to the attached state, one of the geared motor body 20 and the board unit 21 is moved with respect to the other as illustrated in FIGS. 15A and 15B. Then, the motor-side engagement portion 108 (see FIG. 8) of the geared motor body 20 (motor unit 27) is engaged with the board-side engagement portion 150 (see FIG. 11) of the board unit 21. For more details, the two ridge portions 105 of the motor-side engagement portion 108 are inserted into the two groove portions of the board-side engagement portion 150 (see FIG. 16).

Then, as illustrated in FIG. 15, one of the geared motor body 20 and the board unit 21 is slid with respect to the other. For example, the board unit 21 is slid forward without moving the geared motor body 20. As a result, the board unit 21 is put into a state of being disposed at an attachment position, and shifting from the detached state to the attached state is performed.

In the present embodiment, when the board unit 21 is disposed at the attachment position, each of the two board fixing holes 110 (see FIG. 8) of the geared motor body 20 and each of the two board unit fixing holes 138 (see FIG. 11A) of the board unit 21 form a series of holes. In the present embodiment, in the attached state, the fastening element is inserted through each of the two series of holes.

Furthermore, when the board unit 21 is disposed at the attachment position, as illustrated in FIG. 5, the motor-side connector 97 and the board-side first connector 167 are put into a state of being connected. That is, in the present embodiment, only by sliding one of the geared motor body 20 and the board unit 21 with respect to the other, the connectors are connected without separately aligning the motor-side connector 97 and the board-side first connector 167. This facilitates attachment and detachment work of the control board 175 including connector connection (wiring connection).

Moreover, by bringing the geared motor 1 into the attached state, the sealing member 63 (see FIG. 8) is put into a state of entering the sealing recess 158 (see FIG. 11A). For more details, at least the rear side portion of the sealing member 63 enters the sealing recess 158, and at least a part of the rear side surface of the sealing member 63 and the bottom surface of the sealing recess 158 are in close contact with each other. For this reason, the sealing member 63 functions as a packing that prevents water or the like from entering a portion (space) where the coupling portions of the two connectors (motor-side connector 97, board-side first connector 167) are disposed.

That is, the sealing member 63 that is a part on the side of the motor unit 27 and the sealing recess 158 that is a part on the side of the board unit 21 are engaged with each other, so that a second sealing portion (sealing portion) that prevents water or the like from entering the portion (space) where the coupling portions of the two connectors are disposed is formed.

Here, in the geared motor 1 of the present embodiment, as described above, the inner lid portion 66 is configured to function as a sealing member, and includes the first sealing portion in front of the connector insertion hole portion 83 (see FIG. 9, FIG. 10, and the like). That is, the geared motor 1 of the present embodiment includes a plurality of the sealing portions including the first sealing portion and the second sealing portion in front of and behind a standing wall portion in which the connector insertion hole portion 83 is formed.

As illustrated in FIG. 5, in the attached state, the geared motor 1 of the present embodiment is disposed in a state in which a part of the board unit 21 overlaps the motor unit 27 in the vertical direction and the other part of the board unit 21 does not overlap the motor unit 27 in the vertical direction. In other words, in a plan view (plan view viewed from a predetermined direction) viewed from an upper direction with a line-of-sight direction as the vertical direction, a part of the front side of the board unit 21 overlaps the motor unit 27 (motor-side outer member 60), and the other part of the rear side of the board unit 21 does not overlap the motor unit 27. As a result, a portion on the rear side of the board unit 21 extends in a cantilever manner with the rear end side as a free end.

In this way, when the entire board unit 21 does not overlap the motor unit 27, heat from the motor 61 cannot easily be transferred to the control board 175. Furthermore, as described above, the void portion 178 is provided on the lower side of the control board 175 in the portion of the board unit 21 overlapping the motor unit 27 in the vertical direction. As a result, even in the overlapping portion between the board unit 21 and the motor unit 27, the heat from the motor 61 is not easily transferred to the control board 175.

Here, as illustrated in FIGS. 14B and 16, the board-side internal accommodation member 121 of the present embodiment includes an outer protrusion portion 180. For more details, as illustrated in FIG. 16, the board-side internal accommodation member 121 includes a total of two outer protrusion portions 180 one by one at positions separated in the left-right direction, and each of the outer protrusion portions 180 is a protrusion portion having a substantially quadrangular lateral cross-sectional shape and extending in the front-rear direction (a near-far direction in FIG. 16).

In the present embodiment, when the geared motor 1 is in the attached state, that is, when the motor-side engagement portion 108 and the board-side engagement portion 150 are engaged with each other, the outer protrusion portions 180 substantially exactly enter recesses formed between the first groove forming protrusion portions 151 and the attachment protrusion portions 109.

For more details, the two outer protrusion portions 180 substantially exactly enter the recesses respectively formed between projection portions of the first groove forming protrusion portions 151 and outer end portions of the attachment protrusion portions 109 in the left-right direction.

Furthermore, between the two attachment protrusion portions 109, a void portion is formed between an upper surface of the motor-side overhanging portion 71 extending in an arc shape and a lower surface of the internal-side bottom wall portion 160. This also makes it possible to achieve a structure in which heat from the motor 61 is not easily transferred to the control board 175.

Furthermore, in the present embodiment, when the geared motor 1 is shifted to the attached state, one end side of the external wiring member 170 (see FIG. 2) is attached to the board-side second connector 168 (see FIG. 11B) before or after the board unit 21 is attached to the geared motor body 20. Then, by connecting the other end side of the external wiring member 170 to external equipment such as a PLC, it is possible to transmit and receive signals between the control board 175 and the external equipment.

In the geared motor 1 described above, shifting from the attached state in which the board unit 21 is attached to the geared motor body 20 to the detached state in which the board unit 21 is detached from the geared motor body 20 is performed in a reverse procedure to that described above.

As illustrated in FIG. 2, the geared motor 1 of the present embodiment is assumed to be attached in a posture in which the front side (the side of the rotating body 25) faces the side of the frame member 3a. As a result, the rotating body 25 can be located at a position close to the belt engagement portion 4b of the conveying roller 4a, and the conveyor frame 3 and the like do not become an obstacle when attachment and detachment work (see FIG. 15) of the board unit 21 is performed, and the work can be easily performed. Furthermore, it is possible to perform the work of attaching and detaching the board unit 21 while the geared motor body 20 is attached to the conveyor frame 3 via the motor mounting member 12.

The board-side outer member 120 and the board-side internal accommodation member 121 described above may be members made of resin or may be members made of metal (for example, made of iron).

Furthermore, in the above-described embodiment, an example has been described in which the control board 175 transmits, to the motor 61, a signal instructing the rotation speed of the rotor 117 and the rotation direction of the rotor 117 based on a signal or the like from external equipment. However, the present invention is not limited thereto, and for example, the control board 175 may have a function of a zone controller, a PLC, or the like. In this case, the control board 175 may be able to transmit and receive signals to and from a sensor member such as a load presence sensor. That is, the external wiring member 170 may be wiring that connects the sensor member and the control board 175. That is, the control board 175 may determine the rotation speed of the rotor 117 and the rotation direction of the rotor 117 based on the signal received from the sensor member, and transmit a signal instructing the rotation speed of the rotor 117 and the rotation direction of the rotor 117 to the motor 61.

### EXPLANATION OF REFERENCE SIGNS

- 1:: geared motor
- 20:: geared motor body
- 25:: rotating body
- 60:: motor-side outer member (motor accommodation member)
- 61:: motor
- 100:: first motor-side heat dissipation portion (heat dissipation portion)
- 101:: second motor-side heat dissipation portion (heat dissipation portion)
- 102:: third motor-side heat dissipation portion (heat dissipation portion)
- 108:: motor-side engagement portion (second engagement portion)
- 120:: board-side outer member (board accommodation member, external accommodation member)
- 121:: board-side internal accommodation member (board accommodation member, internal accommodation member)
- 140:: first board-side heat dissipation portion (heat dissipation portion)
- 141:: second board-side heat dissipation portion (heat dissipation portion)
- 142:: third board-side heat dissipation portion (heat dissipation portion)
- 150:: board-side engagement portion (first engagement portion)
- 160:: internal-side bottom wall portion (motor-side wall portion)
- 175:: control board (board)
- 178:: void portion (void)

## Claims

1. A geared motor including a motor, and a rotating body that rotates by receiving power from the motor, the geared motor comprising:
a geared motor body; a board; and a board accommodation member that accommodates at least a part of the board,
wherein the board accommodation member is attachable to and detachable from the geared motor body in an accommodated state where at least a part of the board is accommodated, and is shiftable between an attached state where the board accommodation member is attached to the geared motor body and a detached state where the board accommodation member is detached from the geared motor body, and
wherein when shifting to the attached state or the detached state is performed, one of the board accommodation member and the geared motor body is slid relative to the other with the board accommodation member that stays in the accommodated state and the geared motor body engaged with each other.

2. The geared motor according to claim 1,
wherein the geared motor body comprises a motor accommodation member that accommodates at least a part of the motor,
the board accommodation member being attachable to and detachable from the motor accommodation member,
wherein the board accommodation member comprises a first engagement portion while the motor accommodation member comprises a second engagement portion paired with the first engagement portion, and
wherein when shifting to the attached state or the detached state is performed, one of the board accommodation member that stays in the accommodated state and the geared motor body is slid relative to the other with the first engagement portion and the second engagement portion engaged with each other.

3. The geared motor according to claim 2,
wherein at least one of the board accommodation member and the motor accommodation member comprises a heat dissipation portion having an uneven shape on a part of an outer surface thereof.

4. The geared motor according to claim 3,
wherein the board accommodation member comprises the heat dissipation portion provided on three sides of the four sides excluding a side of the motor accommodation member while the motor accommodation member comprises the heat dissipation portion provided on three sides of the four sides excluding a side of the board accommodation member.

5. The geared motor according to claim 2 or 3,
wherein in the attached state, a part of the board accommodation member is disposed at a position overlapping the motor accommodation member while another part is disposed at a position not overlapping the motor accommodation member in a plan view viewed from a predetermined direction.

6. The geared motor according to claim 1 or 2,
wherein the board accommodation member comprises an external accommodation member and an internal accommodation member, and
wherein in the accommodated state, the board is accommodated in the internal accommodation member while the internal accommodation member is accommodated in the external accommodation member.

7. The geared motor according to claim 2,
wherein the board accommodation member comprises a motor-side wall at a position closer to the motor than the board in the attached state, and a void is provided between the board and the motor-side wall portion in the accommodated state.
